# EUROPÄISCHE PATENTSCHRIFT

(11) **EP 1 530 420 B1**
(45) Veröffentlichungstag und Bekanntmachung des Hinweises auf die Patenterteilung: **21.03.2007**
(21) Anmeldenummer: 03793681.2
(22) Anmeldetag: 02.08.2003
(51) Int. Cl.: A01N 43/56, A01N 25/32

(54) **HERBIZIDE MITTEL ENTHALTEND BENZOYLPYRAZOLE UND SAFENER**
HERBICIDAL AGENTS CONTAINING BENZOYLPYRAZOLES AND SAFENERS
PRODUITS HERBICIDES CONTENANT DES BENZOYLPYRAZOLES ET DES PHYTOPROTECTEURS

(30) Priorität: 16.08.2002 DE 10237461
(43) Veröffentlichungstag der Anmeldung: 18.05.2005
(73) Patentinhaber: Bayer CropScience GmbH, 65929 Frankfurt/Main (DE)
(72) Erfinder: ZIEMER, Frank, 65830 Kriftel (DE); BIERINGER, Hermann, 65817 Eppstein (DE); ROSINGER, Christopher, 65719 Hofheim (DE); HACKER, Erwin, 65239 Hochheim (DE); WILLMS, Lothar, 65719 Hofheim (DE)
(86) Internationale Anmeldenummer: PCT/EP2003/008601
(87) Internationale Veröffentlichungsnummer: WO 2004/021788

(56) Entgegenhaltungen:
- WO-A-00/30447
- WO-A-02/098229

## Beschreibung

Die Erfindung betrifft das technische Gebiet der Pflanzenschutzmittel, insbesondere Herbizid-Antidot-Kombinationen (Wirkstoff-Safener-Kombinationen), die für den Einsatz gegen konkurrierende Schadpflanzen in Nutzpflanzenkulturen geeignet sind.

Zahlreiche herbizide Wirkstoffe sind als Inhibitoren des Enzyms p-Hydroxyphenyl-Pyruvat-Dioxygenase (HPPD) bekannt. In jüngerer Zeit wurden beispielsweise in WO 99/58509 , WO 96/25412, WO 97/08164 und US 20020016262 weitere solcher Wirkstoffe offenbart.

Wie bei vielen anderen herbiziden Wirkstoffen sind auch diese Inhibitoren der HPPD nicht immer ausreichend verträglich mit (d.h. nicht selektiv genug bei) einigen wichtigen Kulturpflanzen, wie Mais, Reis oder Getreide, so daß ihrem Einsatz enge Grenzen gesetzt sind. Sie können deshalb in manchen Kulturen nicht oder nur in so geringen Aufwandmengen eingesetzt werden, daß die erwünschte breite herbizide Wirksamkeit gegenüber Schadpflanzen nicht gewährleistet ist. Speziell können viele der genannten Herbizide nicht vollständig selektiv gegen Schadpflanzen in Mais, Reis, Getreide, Zuckerrohr und einigen anderen Kulturen eingesetzt werden.

Zur Überwindung dieser Nachteile ist es bekannt, herbizide Wirkstoffe in Kombination mit einem sogenannten Safener oder Antidot einzusetzen. So sind beispielsweise in WO 99/66795 verschiedene Kombinationen von zahlreichen Inhibitoren der HPPD mit einer Vielzahl von Safenern beschrieben. Die prioritätsältere, nicht vorveröffentlichte deutsche Patentanmeldung DE 10127328.2 (WO 02/098229) beschreibt Kombinationen von Inhibitoren der HPPD mit bestimmten Safenern.

Unter einem Safener ist eine Verbindung zu verstehen, die die phytotoxischen Eigenschaften eines Herbizides gegenüber Nutzpflanzen aufhebt oder verringert, ohne daß die herbizide Wirkung gegenüber Schadpflanzen wesentlich vermindert wird.

Das Auffinden eines Safeners für eine bestimmte Gruppe von Herbiziden ist nach wie vor eine schwierige Aufgabe, da die genauen Mechanismen, durch die ein Safener die Schadwirkung von Herbiziden verringert, nicht bekannt sind. Die Tatsache, daß eine Verbindung in Kombination mit einem bestimmten Herbizid als Safener wirkt, läßt daher keine Rückschlüsse darauf zu, ob eine solche Verbindung auch mit anderen Gruppen von Herbiziden Safenerwirkung aufweist. So hat sich bei der Anwendung von Safenern zum Schutz der Nutzpflanzen vor Schädigungen des Herbizids gezeigt, daß die Safener in vielen Fällen immer noch gewisse Nachteile aufweisen können. Dazu zählen:
- der Safener vermindert die Wirkung der Herbizide gegen die Schadpflanzen,
- die nutzpflanzenschützenden Eigenschaften sind nicht ausreichend,
- in Kombination mit einem gegebenen Herbizid ist das Spektrum der Nutzpflanzen, in denen der Safener/Herbizid-Einsatz erfolgen soll, nicht ausreichend groß,
- ein gegebener Safener ist nicht mit einer ausreichend großen Anzahl von Herbiziden kombinierbar.

Aufgabe der vorliegenden Erfindung war es, weitere Kombinationen von Herbiziden aus der Gruppe der HPPD-Inhibitoren mit Safeneren bereit zu stellen, die geeignet sind, die Selektivität dieser Herbizide gegenüber wichtigen Kulturpflanzen zu steigern. WO 00/30447 beschreibt solche Kombinationen auf einer allgemeineren weise.

Es wurden nun neue Kombinationen von bestimmten Herbiziden aus der Gruppe der HPPD-Inhibitoren, speziell aus der Gruppe der Benzoylpyrazole, die in 3-Position des Benzoylteils einen Isoxazolin-Ring oder in 3- und 4-Position einen ankondensierten Ring tragen, mit Safenern aus der Gruppe der N-Acylsulfonamide gefunden, die die Selektivität dieser Herbizide gegenüber wichtigen Kulturpflanzen erhöhen.

Gegenstand der Erfindung ist daher ein herbizid wirksames Mittel, enthaltend
A) eine herbizid wirksame Menge an einer oder mehreren Verbindungen der Formel (I), gegebenenfalls auch in Salzform, 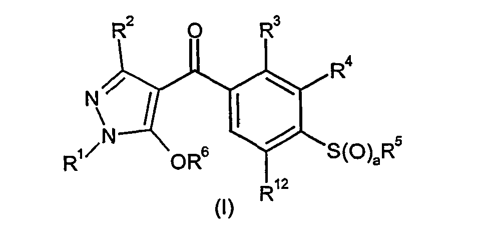 worin die Symbole und Indizes folgende Bedeutungen haben:
   - R⁴: ist 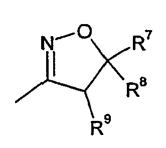 oder R⁴ bildet zusammen mit R⁵ die Einheit CR¹⁰R¹¹CH₂;
   R², R⁶, R⁷, R⁸, R⁹, R¹⁰, R¹¹ sind unabhängig voneinander Wasserstoff oder (C₁-C₆)-Alkyl;
   R¹, R⁵ sind (C₁-C₆)-Alkyl;
   R³ ist Wasserstoff, Halogen, (C₁-C₆)-Alkyl, (C₁-C₆)-Halogenalkyl, (C₁-C₆)-Alkoxy, (C₁-C₆)-Halogenalkoxy, (C₁-C₆)-Alkylthio, (C₁-C₆)-Alkylsulfinyl oder (C₁-C₆)-Alkylsulfonyl;
   R⁶ ist Wasserstoff, S(O)_{b}R¹³, COR¹³ oder CH₂COR¹³;
   R¹² ist Wasserstoff, Halogen, (C₁-C₆)-Alkyl oder (C₁-C₆)-Halogenalkyl;
   R¹³ ist Phenyl, (C₁-C₈)-Alkyl oder (C₃-C₈)-Cycloalkyl;
   a, b sind unabhängig voneinander 0, 1 oder 2; und
B) einer antidotisch wirksamen Menge an einem oder mehreren Safenern aus der Gruppe der N-Acylsulfonamide der Formel (II), gegebenenfalls auch in Salzform,
worin 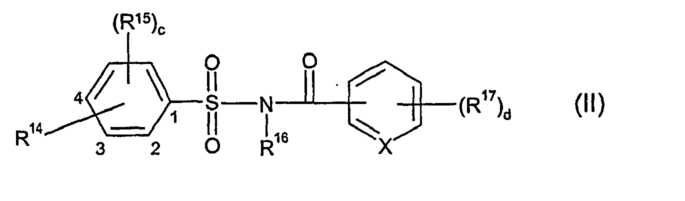 X ist CH oder N;
R¹⁴ ist CO-NR¹⁸R¹⁹ oder NHCO-R²⁰;
R¹⁵ ist Halogen, (C₁-C₄)-Haloalkyl, (C₁-C₄)-Haloalkoxy, Nitro, (C₁-C₄)-Alkyl, (C₁-C₄)-Alkoxy, (C₁-C₄)-Alkylsulfonyl, (C₁-C₄)-Alkoxycarbonyl oder (C₁-C₄)-Alkylcarbonyl;
R¹⁶ ist Wasserstoff, (C₁-C₄)-Alkyl, (C₂-C₄)-Alkenyl oder (C₂-C₄)-Alkinyl;
R¹⁷ ist Halogen, Nitro, (C₁-C₄)-Alkyl, (C₁-C₄)-Haloalkyl, (C₁-C₄)-Haloalkoxy, (C₃-C₆)-Cycloalkyl, Phenyl, (C₁-C₄)-Alkoxy, Cyano, (C₁-C₄)-Alkylthio, (C₁-C₄)-Alkyl-sulfinyl, (C₁-C₄)-Alkylsulfonyl, (C₁-C₄)-Alkoxycarbonyl oder (C₁-C₄)-Alkylcarbonyl;
R¹⁸ ist Wasserstoff, (C₁-C₆)-Alkyl, (C₃-C₆)-Cycloalkyl, (C₂-C₆)-Alkenyl, (C₂-C₆)-Alkinyl, (C₅-C₆)-Cycloalkenyl, Phenyl oder 3- bis 6-gliedriges Heterocyclyl enthaltend v Heteroatome aus der Gruppe Stickstoff, Sauerstoff und Schwefel, wobei die sieben letztgenannten Reste durch v Substituenten aus der Gruppe Halogen, (C₁-C₆)-Alkoxy, (C₁-C₆)-Haloalkoxy, (C₁-C₂)-Alkylsulfinyl, (C₁-C₂)-Alkylsulfonyl, (C₃-C₆)-Cycloalkyl, (C₁-C₄)-Alkoxycarbonyl, (C₁-C₄)-Alkylcarbonyl und Phenyl und im Falle cyclischer Reste auch (C₁-C₄)-Alkyl und (C₁-C₄)-Haloalkyl substituiert sind;
R¹⁹ ist Wasserstoff, (C₁-C₆)-Alkyl, (C₂-C₆)-Alkenyl oder (C₂-C₆)-Alkinyl, wobei die drei letztgenannten Reste durch v Reste aus der Gruppe Halogen, Hydroxy, (C₁-C₄)-Alkyl, (C₁-C₄)-Alkoxy und (C₁-C₄)-Alkylthio substituiert sind, oder
R¹⁸ und R¹⁹ bilden gemeinsam mit dem dem sie tragenden Stickstoffatom einen Pyrrolidinyl- oder Piperidinyl-Rest;
R²⁰ ist Wasserstoff, (C₂-C₄)-Alkylamino, Di-(C₁-C₄)-alkylamino, (C₁-C₆)-Alkyl, (C₃-C₆)-Cycloalkyl, wobei die 2 letztgenannten Reste durch v Substituenten aus der Gruppe Halogen, (C₁-C₄)-Alkoxy, Halogen-(C₁-C₆)-alkoxy und (C₁-C₄)-Alkylthio und im Falle cyclischer Reste auch (C₁-C₄)-Alkyl und (C₁-C₄)-Haloalkyl substituiert sind;
- c: ist 0, 1 oder 2;
- d: ist 1 oder 2;
- v: ist 0, 1, 2 oder 3.

Herbizid wirksame Menge bedeutet im Sinne der Erfindung eine Menge an einem oder mehreren Herbiziden, die geeignet ist, den Pflanzenwuchs negativ zu beeinflussen.

Antidotisch wirksame Menge bedeutet im Sinne der Erfindung eine Menge an einem oder mehreren Safenern, die geeignet ist, der phytotoxischen Wirkung eines Herbizids oder Herbizidgemisches an einer Nutzpflanze zumindest teilweise entgegenzuwirken.

Sofern es im einzelnen nicht anders definiert wird, gelten für die Reste in den Formeln (I), (II) und nachfolgenden Formeln im allgemeinen die nachfolgend genannten Definitionen.

Die Reste Alkyl, Alkoxy, Halogenalkyl, Halogenalkoxy und Alkylthio sowie die entsprechenden ungesättigten und/oder substituierten Reste können im Kohlenstoffgerüst jeweils geradkettig oder verzweigt sein. Alkylreste, auch in den zusammengesetzten Bedeutungen wie Alkoxy, Haloalkyl usw. haben vorzugsweise 1 bis 4 C-Atome und bedeuten z.B. Methyl, Ethyl, n- oder i-Propyl, n-, i-, t- oder 2-Butyl. "(C₁-C₄)-Alkyl" ist die Kurzschreibweise für Alkyl mit 1 bis 4 C-Atomen; entsprechendes gilt für andere allgemeine Restedefinitionen mit in Klammern angegebenen Bereichen für die mögliche Anzahl von C-Atomen.

Halogen bedeutet Fluor, Chlor, Brom oder lod. Halogenalkyl bedeutet durch Halogen, vorzugsweise durch Fluor, Chlor und/oder Brom, insbesondere durch Fluor oder Chlor, teilweise oder vollständig substituiertes Alkyl, Alkenyl oder Alkinyl, z.B. CF₃, CHF₂, CH₂F, CF₂CF₃, CH₂FCCIFH, CCl₃, CHCl₂, CH₂CH₂Cl. Halogenalkoxy ist z.B. OCF₃, OCHF₂, OCH₂F, OCF₂CF₃, OCH₂CF₃ und OCH₂CH₂Cl. Entsprechendes gilt für sonstige durch Halogen substituierte Reste.

Salzform bedeutet, daß die jeweilige Verbindung je nach ihrer Acidität beziehungsweise Basizität beispielsweise nach Einwirkung einer Base oder einer Säure in Form des entsprechenden Salzes vorliegt. Beispiele von Salzen sind solche mit Erdalkali-, Alkalimetallion und Ammonium als Kation. Bevorzugt sind die Natrium-und Kaliumsalze. Weitere Beispiele von Salzen sind Hydrochloride.

Von den Formeln (I) und (II) umfaßt sind auch alle Stereoisomeren, welche die gleiche topologische Verknüpfung der Atome aufweisen, und deren Gemische. Solche Verbindungen enthalten ein oder mehrere asymmetrische C-Atome oder auch Doppelbindungen, die in den allgemeinen Formeln nicht gesondert angegeben sind. Die durch ihre spezifische Raumform definierten möglichen Stereoisomeren, wie Enantiomere, Diastereomere, Z- und E-Isomere, können nach üblichen Methoden aus Gemischen der Stereoisomeren erhalten oder auch durch stereoselektive Reaktionen in Kombination mit dem Einsatz von stereochemisch reinen Ausgangsstoffen hergestellt werden.

Als herbizide Wirkstoffe eignen sich erfindungsgemäß solche Verbindungen der allgemeinen Formeln (I) oder (II), die allein nicht oder nicht optimal in Nutzpflanzenkulturen wie Getreidekulturen, Reis oder Mais eingesetzt werden können, weil sie die Kulturpflanzen zu stark schädigen.

Herbizide der allgemeinen Formel (I) sind z.B. aus WO 99/65314, WO 99/58509 und US 20020016262 bekannt. Die Safener der allgemeinen Formel (II) sind beispielsweise aus WO 97/45016, WO 99/16744 und EP-A 0 365 484 bekannt. Die zitierten Schriften enthalten ausführliche Angaben zu Herstellungsverfahren und Ausgangsmaterialien. Auf diese Schriften wird ausdrücklich Bezug genommen, sie gelten durch Zitat als Bestandteil dieser Beschreibung.

Im Rahmen der vorliegenden Anmeldung sind die Begriffe "Herbizide Mittel" und "Herbizid-Safener-Kombinationen" als gleichbedeutend zu verstehen.

Von besonderem Interesse sind herbizide Mittel, enthaltend Verbindungen der Formel (1), worin
- R³: ist Wasserstoff, Halogen, (C₁-C₆)-Alkyl, (C₁-C₆)-Halogenalkyl;
- R⁶: ist Wasserstoff oder S(O)_{b}R¹³;
- R¹³: ist (C₁-C₆)-Alkyl,
und die anderen Substituenten und Indices jeweils die weiter oben genannten Bedeutungen haben.

Ebenfalls von besonderem Interesse sind herbizide Herbizid-Safener-Kombinationen, enthaltend Safener der Formel (II), worin
R¹⁵ ist Halogen oder (C₁-C₄)-Alkyl,
R¹⁶ ist Wasserstoff;
R¹⁷ ist Halogen, Nitro, (C₁-C₄)-Alkyl, (C₁-C₄)-Haloalkyl, (C₁-C₄)-Haloalkoxy, (C₃-C₆)-Cycloalkyl, (C₁-C₄)-Alkoxy, Cyano, (C₁-C₄)-Alkylthio, (C₁-C₄)-Alkylsulfinyl, (C₁-C₄)-Alkylsulfonyl, (C₁-C₄)-Alkoxycarbonyl oder (C₁-C₄)-Alkylcarbonyl;
R¹⁸ ist Wasserstoff, (C₁-C₆)-Alkyl, (C₃-C₆)-Cycloalkyl, (C₂-C₆)-Alkenyl, (C₅-C₆)-Cycloalkenyl oder Phenyl,
X ist CH,
c ist 0,
und die anderen Substituenten und Indices jeweils die weiter oben genannten Bedeutungen haben.

Bevorzugt sind Herbizid-Safener-Kombinationen, enthaltend Safener der Formel (II),
worin
R¹⁷ ist Halogen, (C₁-C₄)-Alkyl, (C₁-C₄)-Haloalkyl, (C₁-C₄)-Haloalkoxy, (C₃-C₆)-Cycloalkyl oder (C₁-C₄)-Alkoxy;
R¹⁸ ist Wasserstoff, (C₁-C₆)-Alkyl oder (C₃-C₆)-Cycloalkyl,
und die anderen Substituenten und Indices jeweils die weiter oben genannten Bedeutungen haben.

Ebenfalls bevorzugt sind herbizide Mittel, enthaltend Verbindungen der Formel (I),
worin
- R³: ist Chlor oder Methyl;
- a: ist 2,
und die anderen Substituenten und Indices jeweils die weiter oben genannten Bedeutungen haben.

Weiterhin bevorzugt sind ebenfalls Herbizid-Safener-Kombinationen, enthaltend Safener der Formel (II), bei denen der Rest R¹⁴ sich in 4- Position zur Sulfonylgruppe am Phenylring befindet;
- R¹⁴: ist CONR¹⁸R¹⁹,
und die anderen Substituenten und Indices jeweils die weiter oben genannten Bedeutungen haben.

Besonders bevorzugt sind herbizide Mittel, enthaltend Verbindungen der Formel (I),
worin
- R¹²: ist Wasserstoff;
- R¹⁰, R¹¹: sind Methyl;
- R¹³: ist (C₁-C₄)-Alkyl;
- b: ist 2,
und die anderen Substituenten und Indices jeweils die weiter oben genannten Bedeutungen haben.

Ebenfalls besonders bevorzugt sind herbizide Mittel, enthaltend Verbindungen (A1) bis (A7), worin die nachstehend verwendeten Abkürzungen bedeuten:

| | | |
|---|---|---|
| Bz = Benzoyl | t-Bu = tertiär-Butyl | Et = Ethyl |
| Me = Methyl | c-Pr = cyclo-Propyl | i-Pr = iso-Propyl |
| n-Pr = n-Propyl | | |

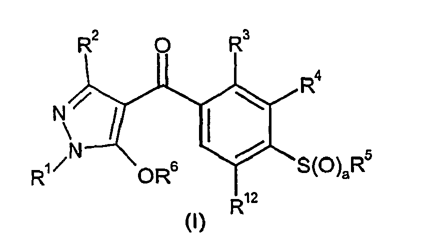

| **Nr.** | **R¹** | **R²** | **R³** | **R⁴** | **R⁵** | **R⁶** | **R¹²** | **a** |
|---|---|---|---|---|---|---|---|---|
| A1 | Me | H | Me | C(Me)₂CH₂ | | SO₂Me | H | 2 |
| A2 | Me | H | Me | C(Me)₂CH₂ | | CH₂Bz | H | 2 |
| A3 | Me | H | Me | C(Me)₂CH₂ | | CO-Et | H | 2 |
| A4 | Me | H | Me | C(Me)₂CH₂ | | H | H | 2 |
| A5 | Me | H | Me | C(Me)₂CH₂ | | SO₂Pr | H | 2 |
| A6 | Me | H | Cl | 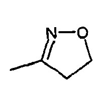 | Me | H | H | 2 |
| A7 | Me | H | Me | 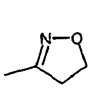 | Me | H | H | 2 |

Weiterhin besonders bevorzugt sind herbizide Mittel, enthaltend Verbindungen (B1) bis (B37):

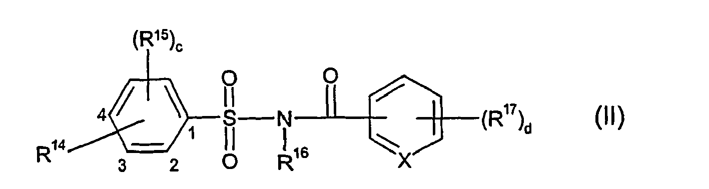

| **Nr.** | **R¹⁴** | **R¹⁵** | **R¹⁶** | **R¹⁷** | **X** |
|---|---|---|---|---|---|
| B1 | 4-NH-CO-i-Pr | H | H | 2-Me | CH |
| B2 | 4-NH-CO-c-Pr | H | H | 2-OMe | 3-N |
| B3 | 4-NH-CO-CH₂-OMe | H | H | 2-OMe | 3-N |
| B4 | 4-NH-CO-Me | H | H | 2-OMe | 3-N |
| B5 | 4-NH-CO-c-Pr | H | H | 2,3-(Me)₂ | CH |
| B6 | 4-NH-CO-Me | H | H | 2,3-(Me)₂ | CH |
| B7 | 4-NH-CO-i-Pr | H | H | 2,5-(Me)₂ | CH |
| B8 | 4-CO-NH-c-Pr | H | H | 2-OMe | CH |
| B9 | 4-CO-NH-i-Pr | H | H | 2-OMe | CH |
| B10 | 4-CO-NH-n-Pr | H | H | 2-OMe | CH |
| B11 | 4-CO-NH-c-Pr | H | H | 2-OMe-5-Me | CH |
| B12 | 4-CO-NH-c-Pr | H | H | 2-OMe-5-Cl | CH |
| B13 | 4-CO-NH-c-Pr | H | H | 2,5-(Me)₂ | CH |
| B14 | 4-CO-NH-c-Pr | H | Me | 2-OMe | CH |
| B15 | 4-CO-NH-i-Pr | H | H | 2-OMe | 3-N |
| B16 | 4-NH-CO-c-Pr | H | Me | 2-OMe | CH |
| B17 | 4-CO-N(Me)₂ | H | H | 2-OMe | CH |
| B18 | 4-CO-N(Et)H | H | H | 2-OMe-5-Cl | CH |
| B19 | 4-CO-N(Et)H | H | H | 2-OMe | CH |
| B20 | 4-NH-CO-N(Me)H | H | Me | 2-OMe | CH |
| B21 | 4-CO-NH-c-Pr | 3-Cl | H | 2-OMe | CH |
| B22 | 4-CO-N(Me)₂ | H | H | 2-OMe-5-Cl | CH |
| B23 | 4-CO-NH-c-Pr | H | Kalium-Salz | 2-OMe | CH |
| B24 | 4-CO-NH-i-Pr | H | Kalium-Salz | 2-OMe | CH |
| B25 | 4-NH-CO-N(Me)₂ | H | Me | 2-OMe | CH |
| B26 | 4-NH-CO-t-Bu | H | H | 2-OMe | CH |
| B27 | 4-NH-CO-CH₂-OMe | H | H | 2-OMe | CH |
| B28 | 4-NH-CO-c-Pr | H | H | 2-OMe | CH |
| B29 | 4-NH-CO-c-Pr | H | H | 2-OMe-5-Cl | CH |
| B30 | 4-NH-CO-Me | H | H | 2-OMe-5-Cl | CH |
| B31 | 4-NH-CO-CH₂-OMe | H | H | 2-OMe-5-Cl | CH |
| B32 | 4-NH-CO-c-Pr | H | H | 2-CF₃ | CH |
| B33 | 4-NH-CO-N(Me)H | H | Natrium-Salz | 2-OMe | CH |
| B34 | 4-NH-CO-i-Pr | H | H | 2-Me | CH |
| B35 | 4-NH-CO-c-Pr | H | H | 2-Cl | CH |
| B36 | 4-NH-CO-N(Me)₂ | H | H | 2-OMe | CH |

Ganz besonders bevorzugt sind herbizide Mittel mit einem Gehalt an folgenden Verbindungen (A) + (B):
(A1) + (B1), (A1) + (B2), (A1) + (B3), (A1) + (B4), (A1) + (B5), (A1) + (B6),
   (A1) + (B7), (A1) + (B8), (A1) + (B9), (A1) + (B10), (A1) + (B11), (A1) + (B12),
   (A1) + (B13), (A1) + (B14), (A1) + (B15), (A1) + (B16), (A1) + (B17), (A1) + (B18),
   (A1) + (B19), (A1) + (B20), (A1) + (B21), (A1) + (B22), (A1) + (B23), (A1) + (B24),
   (A1) + (B25), (A1) + (B26), (A1) + (B27), (A1) + (B28), (A1) + (B29), (A1) + (B30),
   (A1) + (B31), (A1) + (B32), (A1) + (B33), (A1) + (B34), (A1) + (B35), (A1) + (B36);
(A2) + (B1), (A2) + (B2), (A2) + (B3), (A2) + (B4), (A2) + (B5), (A2) + (B6),
   (A2) + (B7), (A2) + (B8), (A2) + (B9), (A2) + (B10), (A2) + (B11), (A2) + (B12),
   (A2) + (B13), (A2) + (B14), (A2) + (B15), (A2) + (B16), (A2) + (B17), (A2) + (B18),
   (A2) + (B19), (A2) + (B20), (A2) + (B21), (A2) + (B22), (A2) + (B23), (A2) + (B24),
   (A2) + (B25), (A2) + (B26), (A2) + (B27), (A2) + (B28), (A2) + (B29), (A2) + (B30),
   (A2) + (B31), (A2) + (B32), (A2) + (B33), (A2) + (B34), (A2) + (B35), (A2) + (B36);
(A3) + (B1), (A3) + (B2), (A3) + (B3), (A3) + (B4), (A3) + (B5), (A3) + (B6),
   (A3) + (B7), (A3) + (B8), (A3) + (B9), (A3) + (B10), (A3) + (B11), (A3) + (B12),
   (A3) + (B13), (A3) + (B14), (A3) + (B15), (A3) + (B16), (A3) + (B17), (A3) + (B18),
   (A3) + (B19), (A3) + (B20), (A3) + (B21), (A3) + (B22), (A3) + (B23), (A3) + (B24),
   (A3) + (B25), (A3) + (B26), (A3)+(B27), (A3) + (B28), (A3) + (B29), (A3) + (B30),
   (A3) + (B31), (A3) + (B32), (A3) + (B33), (A3) + (B34), (A3) + (B35), (A3) + (B36);
(A4) + (B1), (A4) + (B2), (A4) + (B3), (A4) + (B4), (A4) + (B5), (A4) + (B6),
   (A4) + (B7), (A4) + (B8), (A4) + (B9), (A4) + (B10), (A4) + (B11), (A4) + (B12),
   (A4) + (B13), (A4) + (B14), (A4) + (B15), (A4)+(B16), (A4)+(B17), (A4) + (B18),
   (A4) + (B 19), (A4) + (B20), (A4) + (B21), (A4)+(B22), (A4) + (B23), (A4) + (B24),
   (A4) + (B25), (A4) + (826), (A4) + (B27), (A4) + (B28), (A4) + (B29), (A4) + (B30),
   (A4) + (B31), (A4) + (B32), (A4) + (B33), (A4)+(B34), (A4) + (B35), (A4) + (B36);
(A5) + (B1), (A5) + (B2), (A5) + (B3), (A5) + (B4), (A5) + (B5), (A5) + (B6),
   (A5) + (B7), (A5) + (B8), (A5) + (B9), (A5) + (B10), (A5)+(B11), (A5) + (B12),
   (A5) + (B13), (A5) + (B14), (A5) + (B15), (A5) + (B16), (A5) + (B17), (A5) + (B18),
   (A5) + (B19), (A5) + (B20), (A5) + (B21), (A5) + (B22), (A5)+(B23), (A5) + (B24),
   (A5) + (B25), (A5) + (B26), (A5) + (B27), (A5) + (B28), (A5) + (B29), (A5) + (B30),
   (A5) + (B31), (A5) + (B32), (A5) + (B33), (A5)+(B34), (A5) + (B35), (A5) + (B36);
(A6) + (B1), (A6) + (B2), (A6) + (B3), (A6) + (B4), (A6) + (B5), (A6) + (B6),
   (A6) + (B7), (A6) + (B8), (A6) + (B9), (A6) + (B10), (A6) + (B11), (A6) + (B12),
   (A6) + (B13), (A6) + (B14), (A6) + (B15), (A6) + (B16), (A6) + (B17), (A6) + (B18),
   (A6) + (B19), (A6) + (B20), (A6) + (B21), (A6) + (B22), (A6) + (B23), (A6) + (B24),
   (A6) + (B25), (A6) + (B26), (A6) + (B27), (A6) + (B28), (A6) + (B29), (A6) + (B30),
   (A6) + (B31), (A6) + (B32), (A6) + (B33), (A6) + (B34), (A6) + (B35), (A6) + (B36);
(A7) + (B1), (A7) + (B2), (A7) + (B3), (A7) + (B4), (A7) + (B5), (A7) + (B6),
   (A7) + (B7), (A7) + (B8), (A7) + (B9), (A7) + (B10), (A7) + (B11), (A7) + (B12),
   (A7) + (B13), (A7) + (B14), (A7) + (B15), (A7) + (B16), (A7) + (B17), (A7) + (B18),
   (A7) + (B19), (A7) + (B20), (A7) + (B21), (A7) + (B22), (A7) + (B23), (A7) + (B24),
   (A7) + (B25), (A7) + (B26), (A7) + (B27), (A7) + (B28), (A7) + (B29), (A7) + (B30),
   (A7) + (B31), (A7) + (B32), (A7) + (B33), (A7) + (B34), (A7) + (B35), (A7) + (B36).

Die hier als Safener (Antidote) genannten Verbindungen, reduzieren oder unterbinden phytotoxische Effekte, die beim Einsatz der herbiziden Wirkstoffe der Formel (I) in Nutzpflanzenkulturen auftreten können, ohne die Wirksamkeit dieser herbiziden Wirkstoffe gegen Schadpflanzen wesentlich zu beeinträchtigen. Hierdurch kann das Einsatzgebiet herkömmlicher Pflanzenschutzmittel ganz erheblich erweitert und z.B. auf Kulturen wie Weizen, Gerste, Reis und Mais ausgedehnt werden, in denen bisher ein Einsatz der Herbizide nicht möglich oder nur beschränkt, das heißt, in niedrigen Dosierungen mit wenig Breitenwirkung möglich war.

Die herbiziden Wirkstoffe und die erwähnten Safener können zusammen (als fertige Formulierung oder im Tank-Mix-Verfahren) oder in beliebiger Reihenfolge nacheinander ausgebracht werden. Das Gewichtsverhältnis Safener zu herbizider Wirkstoff kann innerhalb weiter Grenzen variieren und ist vorzugsweise im Bereich von 1:100 bis 100:1, insbesondere von 1:10 bis 10:1. Die jeweils optimalen Mengen an herbizidem Wirkstoff und Safener sind vom Typ des verwendeten herbiziden Wirkstoffs oder vom verwendeten Safener sowie von der Art des zu behandelnden Pflanzenbestandes abhängig und lassen sich von Fall zu Fall durch einfache, routinemäßige Vorversuche ermitteln.

Haupteinsatzgebiete für die Anwendung der erfindungsgemäßen Kombinationen sind vor allem Mais und Getreidekulturen wie z.B. Weizen, Roggen, Gerste, Hafer, Reis, Sorghum, aber auch Baumwolle, Zuckerrohr und Sojabohne, vorzugsweise Getreide, Reis und Mais.

Die erfindungsgemäß eingesetzten Safener können je nach ihren Eigenschaften zur Vorbehandlung des Saatgutes der Kulturpflanze (Beizung der Samen) verwendet werden oder vor der Saat in die Saatfurchen eingebracht oder zusammen mit dem Herbizid vor oder nach dem Auflaufen der Pflanzen angewendet werden. Vorauflaufbehandlung schließt sowohl die Behandlung der Anbaufläche vor der Aussaat als auch die Behandlung der angesäten, aber noch nicht bewachsenen Anbauflächen ein. Bevorzugt ist die gemeinsame Anwendung mit dem Herbizid. Hierzu können Tankmischungen oder Fertigformulierungen eingesetzt werden.
Die benötigten Aufwandmengen der Safener können je nach Indikation und verwendetem herbiziden Wirkstoff innerhalb weiter Grenzen schwanken und liegen in der Regel im Bereich von 0,001 bis 5 kg, vorzugsweise 0,005 bis 0,5 kg Wirkstoff je Hektar.

Gegenstand der vorliegenden Erfindung ist deshalb auch ein Verfahren zum Schutz von Kulturpflanzen vor phytotoxischen Nebenwirkungen von Herbiziden der Formel (I), das dadurch gekennzeichnet ist, daß eine antidotisch wirksame Menge einer Verbindung der Formel (II) vor, nach oder gleichzeitig mit dem herbiziden Wirkstoff A der Formel (I) auf die Pflanzen, Pflanzensamen oder die Anbaufläche appliziert wird.

Die erfindungsgemäße Herbizid-Safener Kombination kann auch zur Bekämpfung von Schadpflanzen in Kulturen von bekannten oder noch zu entwickelnden gentechnisch veränderten Pflanzen eingesetzt werden. Die transgenen Pflanzen zeichnen sich in der Regel durch besondere vorteilhafte Eigenschaften aus, beispielsweise durch Resistenzen gegenüber bestimmten Pflanzenschutzmitteln, Resistenzen gegenüber Pflanzenkrankheiten oder Erregern von Pflanzenkrankheiten wie bestimmten Insekten oder Mikroorganismen wie Pilzen, Bakterien oder Viren. Andere besondere Eigenschaften betreffen z. B. das Erntegut hinsichtlich Menge, Qualität, Lagerfähigkeit, Zusammensetzung und spezieller Inhaltsstoffe. So sind transgene Pflanzen mit erhöhtem Stärkegehalt oder veränderter Qualität der Stärke oder solche mit anderer Fettsäurezusammensetzung des Ernteguts bekannt.

Bevorzugt ist die Anwendung der erfindungsgemäßen Kombinationen in wirtschaftlich bedeutenden transgenen Kulturen von Nutz-und Zierpflanzen, z. B. von Getreide wie Weizen, Gerste, Roggen, Hafer, Hirse, Reis, Maniok und Mais oder auch Kulturen von Zuckerrohr, Zuckerrübe, Baumwolle, Sojabohne, Raps, Kartoffel, Tomate, Erbse und anderen Gemüsesorten.

Bei der Anwendung der erfindungsgemäßen Kombinationen in transgenen Kulturen treten neben den in anderen Kulturen zu beobachtenden Wirkungen gegenüber Schadpflanzen oftmals Wirkungen auf, die für die Applikation in der jeweiligen transgenen Kultur spezifisch sind, z.B. ein verändertes oder speziell erweitertes Unkrautspektrum, das bekämpft werden kann, veränderte Aufwandmengen, die für die Applikation eingesetzt werden können, vorzugsweise gute Kombinierbarkeit mit den Herbiziden, gegenüber denen die transgene Kultur resistent ist, sowie Beeinflussung von Wuchs und Ertrag der transgenen Kulturpflanzen.

Gegenstand der Erfindung ist deshalb auch die Verwendung der erfindungsgemäßen Kombination zur Bekämpfung von Schadpflanzen in transgenen Kulturpflanzen.

Die Safener der Formel (II) und deren Kombinationen mit einem oder mehreren der genannten herbiziden Wirkstoffe der Formel (I) können auf verschiedene Art formuliert werden, je nachdem welche biologischen und/oder chemischphysikalischen Parameter vorgegeben sind. Als Formulierungsmöglichkeiten kommen beispielsweise in Frage:
Spritzpulver (WP), emulgierbare Konzentrate (EC), wasserlösliche Pulver (SP), wasserlösliche Konzentrate (SL), konzentrierte Emulsionen (BW) wie Öl-in-Wasser und Wasser-in-Öl-Emulsionen, versprühbare Lösungen oder Emulsionen, Kapselsuspensionen (CS), Dispersionen auf Öl- oder Wasserbasis (SC), Suspoemulsionen, Suspensionskonzentrate, Stäubemittel (DP), ölmischbare Lösungen (OL), Beizmittel, Granulate (GR) in Form von Mikro-, Sprüh-, Aufzugs- und Adsorptionsgranulaten, Granulate für die Boden- bzw. Streuapplikation, wasserlösliche Granulate (SG), wasserdispergierbare Granulate (WG), ULV-Formulierungen, Mikrokapseln und Wachse.

Diese einzelnen Formulierungstypen sind im Prinzip bekannt und beispielsweise beschrieben in: Winnacker-Küchler, "Chemische Technologie" Band 7, C. Hauser Verlag München, 4. Aufl. 1986; Wade van Valkenburg, "Pesticide Formulations", Marcel Dekker N.Y., 1973; K. Martens, "Spray Drying Handbook", 3rd Ed. 1979, G. Goodwin Ltd. London.

Die gegebenenfalls notwendigen Formulierungshilfsmittel, wie Inertmaterialien, Tenside, Lösungsmittel und weitere Zusatzstoffe, sind ebenfalls bekannt und beispielsweise beschrieben in: Watkins, "Handbook of Insecticide Dust Diluents and Carriers", 2nd Ed., Darland Books, Caldwell N.J., H.v. Olphen, "Introduction to Clay Colloid Chemistry"; 2nd Ed., J. Wiley & Sons, N.Y.; C. Marsden, "Solvents Guide"; 2nd Ed., Interscience, N.Y. 1963; McCutcheon's "Detergents and Emulsifiers Annual", MC Publ. Corp., Ridgewood N.J.; Sisley and Wood, "Encyclopedia of Surface Active Agents", Chem. Publ. Co. Inc., N.Y. 1964; Schönfeldt, "Grenzflächenaktive Äthylenoxidaddukte", Wiss. Verlagsgesell., Stuttgart 1976; Winnacker-Küchler, "Chemische Technologie", Band 7, C. Hauser Verlag München, 4. Aufl. 1986.

Auf der Basis dieser Formulierungen lassen sich auch Kombinationen mit anderen als Pflanzenschutzmitteln wirksamen Stoffen, wie Insektiziden, Akariziden, Herbiziden, Fungiziden, sowie mit Safenern, Düngemitteln und/oder Wachstumsregulatoren herstellen, z.B. in Form einer Fertigformulierung oder als Tankmix.

Spritzpulver sind in Wasser gleichmäßig dispergierbare Präparate, die neben dem Wirkstoff außer einem Verdünnungs- oder Inertstoff noch Tenside ionischer und/oder nichtionischer Art (Netzmittel, Dispergiermittel), z.B. polyoxyethylierte Alkylphenole, polyoxethylierte Fettalkohole, polyoxethylierte Fettamine, Fettalkoholpolyglykolethersulfate, Alkansulfonate, Alkylbenzolsulfonate, ligninsulfonsaures Natrium, 2,2'-dinaphthylmethan-6,6'-disulfonsaures Natrium, dibutylnaphthalin-sulfonsaures Natrium oder auch oleoylmethyltaurinsaures Natrium enthalten. Zur Herstellung der Spritzpulver werden die herbiziden Wirkstoffe beispielsweise in üblichen Apparaturen, wie Hammermühlen, Gebläsemühlen und Luftstrahlmühlen, feingemahlen und gleichzeitig oder anschließend mit den Formulierungshilfsmitteln vermischt.

Emulgierbare Konzentrate werden z.B. durch Auflösen des Wirkstoffes in einem organischen Lösungsmittel, wie Butanol, Cyclohexanon, DMF oder auch höhersiedende Kohlenwasserstoffe wie gesättigte oder ungesättigte Aliphaten oder Alicyclen, Aromaten oder Mischungen der organischen Lösungsmittel unter Zusatz von einem oder mehreren Tensiden ionischer und/oder nichtionischer Art (Emulgatoren) hergestellt. Als Emulgatoren können beispielsweise verwendet werden: Alkylarylsulfonsaure Calzium-Salze, wie Ca-dodecylbenzolsulfonat, oder nichtionische Emulgatoren, wie Fettsäurepolyglykolester, Alkylarylpolyglykolether, Fettalkoholpolyglykolether, Propylenoxid-Ethylenoxid-Kondensationsprodukte, Alkylpolyether, Sorbitanester, wie Sorbitanfettsäureester, oder Polyoxyethylensorbitanester, wie Polyoxyethylensorbitanfettsäureester. Stäubemittel erhält man im allgemeinen durch Vermahlen des Wirkstoffes mit fein verteilten festen Stoffen, z.B. Talkum, natürlichen Tonen, wie Kaolin, Bentonit und Pyrophyllit, oder Diatomeenerde.

Suspensionskonzentrate können auf Wasser- oder Ölbasis sein. Sie können beispielsweise durch Naß-Vermahlung mittels handelsüblicher Perlmühlen und gegebenenfalls Zusatz von Tensiden, wie sie z.B. bei den anderen Formulierungstypen bereits aufgeführt sind, hergestellt werden.

Emulsionen, z.B. Öl-in-Wasser-Emulsionen (EW), lassen sich beispielsweise mittels Rührern, Kolloidmühlen und/oder statischen Mischern unter Verwendung von wäßrigen organischen Lösungsmitteln und gegebenenfalls Tensiden, wie sie z.B. bei den anderen Formulierungstypen bereits aufgeführt sind, herstellen.

Granulate können entweder durch Verdüsen des Wirkstoffes auf adsorptionsfähiges, granuliertes Inertmaterial hergestellt werden oder durch Aufbringen von Wirkstoffkonzentraten mittels Klebemitteln, z.B. Polyvinylalkohol, polyacrylsaurem Natrium oder auch Mineralölen, auf die Oberfläche von Trägerstoffen, wie Sand, Kaolinite oder von granuliertem Inertmaterial. Auch können geeignete Wirkstoffe in der für die Herstellung von Düngemittelgranulaten üblichen Weise - gewünschtenfalls in Mischung mit Düngemitteln - granuliert werden. Wasserdispergierbare Granulate werden in der Regel nach den üblichen Verfahren, wie Sprühtrocknung, Wirbelbett-Granulierung, Teller-Granulierung, Mischung mit Hochgeschwindigkeitsmischern und Extrusion ohne festes Inertmaterial, hergestellt. Zur Herstellung von Teller-, Fließbett-, Extruder- und Sprühgranulaten siehe z.B. in "Spray-Drying Handbook" 3rd ed. 1979, G. Goodwin Ltd., London; J.E. Browning, "Agglomeration", Chemical and Engineering 1967, Seiten 147 ff; "Perry's Chemical Engineer's Handbook", 5th Ed., McGraw-Hill, New York 1973, S. 8-57.

Für weitere Einzelheiten zur Formulierung von Pflanzenschutzmitteln siehe z.B. G.C. Klingman, "Weed Control as a Science", John Wiley and Sons, Inc., New York, 1961, Seiten 81-96 und J.D. Freyer, S.A. Evans, "Weed Control Handbook", 5th Ed., Blackwell Scientific Publications, Oxford, 1968, Seiten 101-103.

Die agrochemischen Zubereitungen enthalten in der Regel 0,1 bis 99 Gew.-%, insbesondere 0,1 bis 95 Gew.-%, Wirkstoffe der Formel (II) oder des Herbizid/Antidot-Wirkstoffgemischs (I)/(II) und 1 bis 99,9 Gew.-%, insbesondere 5 bis 99,8 Gew.-%, eines festen oder flüssigen Zusatzstoffes und 0 bis 25 Gew.-%, insbesondere 0,1 bis 25 Gew.-% eines Tensides.

In Spritzpulvern beträgt die Wirkstoffkonzentration z.B. etwa 10 bis 90 Gew.%, der Rest zu 100 Gew.-% besteht aus üblichen Formulierungsbestandteilen. Bei emulgierbaren Konzentraten beträgt die Konzentration etwa 1 bis 80 Gew.-%. Staubförmige Formulierungen enthalten etwa 1 bis 20 Gew.-% an Wirkstoffen, versprühbare Lösungen etwa 0,2 bis 20 Gew.-% Wirkstoffe. Bei Granulaten, wie wasserdispergierbaren Granulaten, hängt der Wirkstoffgehalt zum Teil davon ab, ob die wirksame Verbindung flüssig oder fest vorliegt. In der Regel liegt der Gehalt bei den in Wasser dispergierbaren Granulaten zwischen 10 und 90 Gew.-%.

Daneben enthalten die genannten Wirkstofformulierungen gegebenenfalls die jeweils üblichen Haft-, Netz-, Dispergier-, Emulgier-, Penetrations-, Konservierungs-, Frostschutz- und Lösungsmittel, Füll-, Träger- und Farbstoffe, Entschäumer, Verdunstungshemmer und den pH-Wert und die Viskosität beeinflussende Mittel.

Mit den äußeren Bedingungen wie Temperatur, Feuchtigkeit, der Art des verwendeten Herbizids, u.a. variiert die erforderliche Aufwandmenge der Herbizide der Formel (I). Sie kann innerhalb weiter Grenzen variiert werden, z.B. zwischen 0,001 und 10,0 kg/ha oder mehr Aktivsubstanz, vorzugsweise liegt sie jedoch zwischen 0,005 und 5 kg/ha.

### Folgende Beispiele dienen zur Erläuterung der Erfindung:

A Formulierungsbeispiele
a) Ein Staubmittel wird erhalten, indem man 10 Gew.-Teile einer Verbindung der Formel (II) oder eines Wirkstoffgemischs aus einem herbiziden Wirkstoff der Formel (I) und einem Safener der Formel (II) und 90 Gew.-Teile Talkum als Inertstoff mischt und in einer Schlagmühle zerkleinert.
b) Ein in Wasser leicht dispergierbares, benetzbares Pulver wird erhalten, indem man 25 Gewichtsteile einer Verbindung der Formel (II) oder eines Wirkstoffgemischs aus einem herbiziden Wirkstoff der Formel (I) und einem Safener der Formel (II), 64 Gewichtsteile kaolinhaltigen Quarz als Inertstoff, 10 Gewichts-teile ligninsulfonsaures Kalium und 1 Gew.-Teil oleoylmethyltaurinsaures Natrium als Netz- und Dispergiermittel mischt und in einer Stiftmühle mahlt.
c) Ein in Wasser leicht dispergierbares Dispersionskonzentrat wird erhalten, Wirkstoffgemischs aus einem herbiziden Wirkstoff der Formel (I) und einem Safener der Formel (II), 6 Gew.-Teilen Alkylphenolpolyglykolether (®Triton X 207), 3 Gew.-Teilen Isotridecanolpolyglykolether (8 EO) und 71 Gew.- Teilen paraffinischem Mineralöl (Siedebereich z.B. ca. 255 bis über 277 C) mischt und in einer Reibkugelmühle auf eine Feinheit von unter 5 Mikron vermahlt.
d) Ein emulgierbares Konzentrat wird erhalten aus 15 Gew.-Teilen einer Verbindung der Formel (II) oder eines Wirkstoffgemischs aus einem herbiziden Wirkstoff der Formel (I) und einem Safener der Formel (II), 75 Gew. Teilen Cyclohexanon als Lösemittel und 10 Gew.-Teilen oxethyliertes Nonylphenol als Emulgator.
e) Ein in Wasser dispergierbares Granulat wird erhalten, indem man

| | |
|---|---|
| 75 Gew.-Teile | einer Verbindung der Formel (II) oder eines Wirkstoffgemischs aus einem herbiziden Wirkstoff der Formel (I) und einem Safener der Formel (II) |
| 10 " | ligninsulfonsaures Calcium, |
| 5 " | Natriumlaurylsulfat, |
| 3 " | Polyvinylalkohol und |
| 7 " | Kaolin |

mischt, auf einer Stiftmühle mahlt und das Pulver in einem Wirbelbett durch Aufsprühen von Wasser als Granulierflüssigkeit granuliert.
f) Ein in Wasser dispergierbares Granulat wird auch erhalten, indem man

| | |
|---|---|
| 25 Gew.-Teil(e) | einer Verbindung der Formel (II) oder eines Wirkstoffgemischs aus einem herbiziden Wirkstoff der Formel (I) und einem Safener der Formel (II) |
| 5 " | 2,2'-dinaphthylmethan-6,6'-disulfonsaures Natrium, |
| 2 " | oleoylmethyltaurinsaures Natrium, |
| 1 " | Polyvinylalkohol, |
| 17 " | Calciumcarbonat und |
| 50 " | Wasser |

auf einer Kolloidmühle homogensiert und vorzerkleinert, anschließend auf einer Perlmühle mahlt und die so erhaltene Suspension in einem Sprühturm mittels einer Einstoffdüse zerstäubt und trocknet.

### B Biologische Beispiele

### Versuche im Nachauflauf:

Samen von Nutzpflanzen werden im Freiland in Erde ausgelegt und mit Erde bedeckt. Im 2- bis 4-Blattstadium werden die Pflanzen mit den als emulgierbare Konzentrate oder Stäubemittel formulierten Herbiziden und zu Vergleichszwecken mit Herbiziden und Safenern in Form wäßriger Dispersionen oder Suspensionen bzw. Emulsionen mit einer Wasseraufwandmenge von umgerechnet 300 bis 800l/ha in unterschiedlichen Dosierungen behandelt. Die optische Bewertung der Schäden an den Nutzpflanzen erfolgt 14 Tage nach der Behandlung. Die Ergebnisse der Beispiele zeigen, daß durch die Verwendung der erfindungsgemäßen Mittel enthaltend Herbizid und Safener die Schäden in den Nutzpflanzen gegenüber der alleinigen Verwendung des Herbizids deutlich gemindert werden können. Je nach Aufwandmenge, Art der Nutzpflanze und Art des erfindungsgemäßen Mittels werden die Schäden um bis 100% gegenüber der alleinigen Verwendung des Herbizid gemindert. Die Dosierung ist in Gramm Aktivsubstanz pro Hektar (g a.i/ha) angegeben.

| **Verbindung** | **Dosierung [g/ha]** | **Verminderung der Schäden in Mais gegenüber alleiniger Anwendung des Herbizids** |
|---|---|---|
| A4 + B8 | 200 + 100 | -87% |
| A5 + B8 | 200 + 100 | - 100% |
| A6 + 88 | 200 + 100 | -100% |
| A7 + B8 | 200 + 100 | - 100% |
| A4 + B9 | 200 + 200 | -63% |
| A4 + B17 | 200 + 200 | -75% |
| A4 + B27 | 200 + 200 | -75% |
| A4 + B28 | 200 + 200 | -63% |

## Patentansprüche

1. Herbizides Mittel, enthaltend
A) eine herbizid wirksame Menge an einer oder mehreren Verbindungen der Formel (I), gegebenenfalls auch in Salzform, 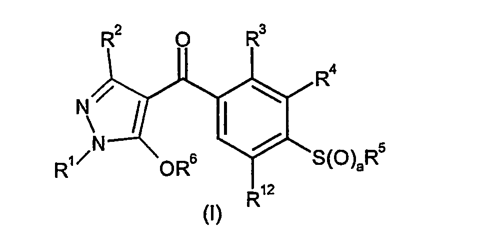 worin die Symbole und Indizes folgende Bedeutungen haben:
R⁴ ist 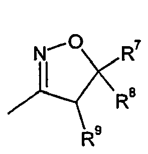 oder R⁴ bildet zusammen mit R⁵ die Einheit CR¹⁰R¹¹CH₂;
R², R⁶, R⁷, R⁸, R⁹, R¹⁰, R¹¹ sind unabhängig voneinander Wasserstoff oder (C₁-C₆)-Alkyl;
R¹, R⁵ sind (C₁-C₆)-Alkyl;
R³ ist Wasserstoff, Halogen, (C₁-C₆)-Alkyl, (C₁-C₆)-Halogenalkyl, (C₁-C₆)-Alkoxy, (C₁-C₆)-Halogenalkoxy, (C₁-C₆)-Alkylthio, (C₁-C₆)-Alkylsulfinyl oder (C₁-C₆)-Alkylsulfonyl;
R⁶ ist Wasserstoff, S(O)_{b}R¹³, COR¹³ oder CH₂COR¹³;
R¹² ist Wasserstoff, Halogen, (C₁-C₆)-Alkyl oder (C₁-C₆)-Halogenalkyl;
R¹³ ist Phenyl, (C₁-C₈)-Alkyl oder (C₃-C₈)-Cycloalkyl;
a, b sind unabhängig voneinander 0, 1 oder 2;
und
B) einer antidotisch wirksamen Menge an einem oder mehreren Safenern aus der Gruppe der N-Acylsulfonamide der Formel (II), gegebenenfalls auch in Salzform, worin 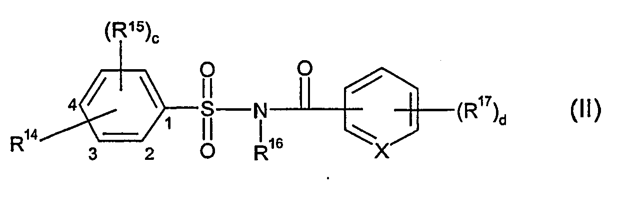 X ist CH oder N;
R¹⁴ ist CO-NR¹⁸R¹⁹ oder NHCO-R²⁰;
R¹⁵ ist Halogen, (C₁-C₄)-Haloalkyl, (C₁-C₄)-Haloalkoxy, Nitro, (C₁-C₄)-Alkyl, (C₁-C₄)-Alkoxy, (C₁-C₄)-Alkylsulfonyl, (C₁-C₄)-Alkoxycarbonyl oder (C₁-C₄)-Alkylcarbonyl;
R¹⁶ ist Wasserstoff, (C₁-C₄)-Alkyl, (C₂-C₄)-Alkenyl oder (C₂-C₄)-Alkinyl;
R¹⁷ ist Halogen, Nitro, (C₁-C₄)-Alkyl, (C₁-C₄)-Haloalkyl, (C₁-C₄)-Haloalkoxy, (C₃-C₆)-Cycloalkyl, Phenyl, (C₁-C₄)-Alkoxy, Cyano, (C₁-C₄)-Alkylthio, (C₁-C₄)-Alkyl-sulfinyl, (C₁-C₄)-Alkylsulfonyl, (C₁-C₄)-Alkoxycarbonyl oder (C₁-C₄)-Alkylcarbonyl;
R¹⁸ ist Wasserstoff, (C₁-C₆)-Alkyl, (C₃-C₆)-Cycloalkyl, (C₂-C₆)-Alkenyl, (C₂-C₆)-Alkinyl, (C₅-C₆)-Cycloalkenyl, Phenyl oder 3- bis 6-gliedriges Heterocyclyl enthaltend v Heteroatome aus der Gruppe Stickstoff, Sauerstoff und Schwefel, wobei die sieben letztgenannten Reste durch v Substituenten aus der Gruppe Halogen, (C₁-C₆)-Alkoxy, (C₁-C₆)-Haloalkoxy, (C₁-C₂)-Alkylsulfinyl, (C₁-C₂)-Alkylsulfonyl, (C₃-C₆)-Cycloalkyl, (C₁-C₄)-Alkoxycarbonyl, (C₁-C₄)-Alkylcarbonyl und Phenyl und im Falle cyclischer Reste auch (C₁-C₄)-Alkyl und (C₁-C₄)-Haloalkyl substituiert sind;
R¹⁹ ist Wasserstoff, (C₁-C₆)-Alkyl, (C₂-C₆)-Alkenyl oder (C₂-C₆)-Alkinyl, wobei die drei letztgenannten Reste durch v Reste aus der Gruppe Halogen, Hydroxy, (C₁-C₄)-Alkyl, (C₁-C₄)-Alkoxy und (C₁-C₄)-Alkylthio substituiert sind, oder
R¹⁸ und R¹⁹ bilden gemeinsam mit dem dem sie tragenden Stickstoffatom einen Pyrrolidinyl- oder Piperidinyl-Rest;
R²⁰ ist Wasserstoff, (C₂-C₄)-Alkylamino, Di-(C₁-C₄)-alkylamino, (C₁-C₆)-Alkyl, (C₃-C₆)-Cycloalkyl, wobei die 2 letztgenannten Reste durch v Substituenten aus der Gruppe Halogen, (C₁-C₄)-Alkoxy, Halogen-(C₁-C₆)-alkoxy und (C₁-C₄)-Alkylthio und im Falle cyclischer Reste auch (C₁-C₄)-Alkyl und (C₁-C₄)-Haloalkyl substituiert sind;
c ist 0, 1 oder 2;
d ist 1 oder 2;
v ist 0, 1, 2 oder 3.

2. Herbizides Mittel nach Anspruch 1, worin
R³ ist Wasserstoff, Halogen, (C₁-C₆)-Alkyl, (C₁-C₆)-Halogenalkyl;
R⁶ ist Wasserstoff oder S(O)_{b}R¹³;
R¹³ ist (C₁-C₆)-Alkyl.

3. Herbizides Mittel nach Anspruch 1 oder 2, worin
R¹⁵ ist Halogen oder (C₁-C₄)-Alkyl,
R¹⁶ ist Wasserstoff;
R¹⁷ ist Halogen, Nitro, (C₁-C₄)-Alkyl, (C₁-C₄)-Haloalkyl, (C₁-C₄)-Haloalkoxy, (C₃-C₆)-Cycloalkyl, (C₁-C₄)-Alkoxy, Cyano, (C₁-C₄)-Alkylthio, (C₁-C₄)-Alkylsulfinyl, (C₁-C₄)-Alkylsulfonyl, (C₁-C₄)-Alkoxycarbonyl oder (C₁-C₄)-Alkylcarbonyl;
R¹⁸ ist Wasserstoff, (C₁-C₆)-Alkyl, (C₃-C₆)-Cycloalkyl, (C₂-C₆)-Alkenyl, (C₅-C₆)-Cycloalkenyl oder Phenyl,
X ist CH,
c ist 0.

4. Herbizides Mittel nach einem der Ansprüche 1 bis 3, worin
R¹⁷ ist Halogen, (C₁-C₄)-Alkyl, (C₁-C₄)-Haloalkyl, (C₁-C₄)-Haloalkoxy, (C₃-C₆)-Cycloalkyl oder (C₁-C₄)-Alkoxy;
R¹⁸ ist Wasserstoff, (C₁-C₆)-Alkyl oder (C₃-C₆)-Cycloalkyl.

5. Herbizides Mittel nach einem der Ansprüche 1 bis 4, worin
R³ ist Chlor oder Methyl;
a ist 2.

6. Herbizides Mittel nach einem der Ansprüche 1 bis 5, worin der Rest R¹⁴ sich in 4- Position zur Sulfonylgruppe am Phenylring befindet und R¹⁴ ist CONR¹⁸R¹⁹.

7. Herbizides Mittel nach einem der Ansprüche 1 bis 6, worin
R¹² ist Wasserstoff;
R¹⁰, R¹¹ sind Methyl;
R¹³ ist (C₁-C₄)-Alkyl;
b ist 2.

8. Herbizides Mittel gemäß einem oder mehreren der Ansprüche 1 bis 7, **dadurch gekennzeichnet, daß** das Gewichtsverhältnis Herbizid:Safener 1:100 bis 100:1 beträgt.

9. Verfahren zur Bekämpfung von Schadpflanzen in Kulturen, **dadurch gekennzeichnet, daß** man eine herbizid wirksame Menge an einer Herbizid-Safener-Kombination gemäß einem oder mehreren der Ansprüche 1 bis 7 auf die Schadpflanzen, Pflanzen, Pflanzensamen oder die Fläche, auf der die Pflanzen wachsen, aufbringt.

10. Verfahren gemäß Anspruch 9, **dadurch gekennzeichnet, daß** die Pflanzen aus der Gruppe Mais, Weizen, Roggen, Gerste, Hafer, Reis, Sorghum, Baumwolle, Zuckerrohr und Sojabohne stammen.

11. Verfahren gemäß Anspruch 9 oder 10, **dadurch gekennzeichnet, daß** die Pflanzen gentechnisch verändert sind.

## Claims

1. A herbicidal composition comprising
A) a herbicidally effective amount of one or more compounds of the formula (I), if appropriate also in the form of their salts, 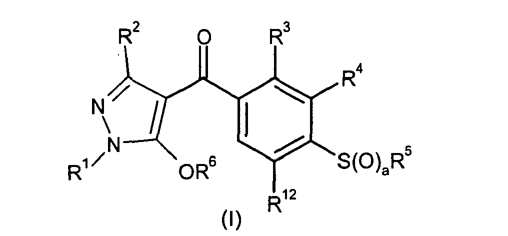 where the symbols and indices are as defined below: 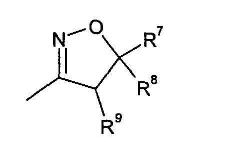 R⁴ is or R⁴ together with R⁵ forms the unit CR¹⁰R¹¹CH₂ ;
R², R⁶, R⁷, R⁸, R⁹, R¹⁰, R¹¹ independently of one another are hydrogen or (C₁-C₆)-alkyl ;
R¹, R⁵ are (C₁-C₆) -alkyl;
R³ is hydrogen, halogen, (C₁-C₆)-alkyl, (C₁-C₆) - haloalkyl, (C₁-C₆) -alkoxy, (C₁-C₆)-haloalkoxy, (C₁-C₆) -alkylthio, (C₁-C₆) -alkylsulfinyl or (C₁-C₆) - alkylsulfonyl;
R⁶ is hydrogen, S(O)_{b}R¹³, COR¹³ or CH₂COR¹³;
R¹² is hydrogen, halogen, (C₁-C₆)-alkyl or (C₁-C₆)-haloalkyl;
R¹³ is phenyl, (C₁-C₈)-alkyl or (C₃-C₈)-cycloalkyl; a, b independently of one another are 0, 1 or 2;
and
B) an antidote-effective amount of one or more safeners from the group of the N-acylsulfonamides of the formula (II), if appropriate also in the form of their salts, 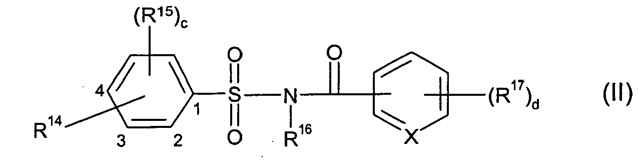
where
X is CH or N;
R¹⁴ is CO-NR¹⁸R¹⁹ or NHCO-R²⁰ ;
R¹⁵ is halogen, (C₁-C₄) -haloalkyl, (C₁-C₄) - haloalkoxy, nitro, (C₁-C₄) -alkyl, (C₁-C₄) -alkoxy, (C₁-C₄) -alkylsulfonyl, (C₁-C₄) -alkoxycarbonyl or (C₁-C₄)-alkylcarbonyl ;
R¹⁶ is hydrogen, (C₁-C₄)-alkyl, (C₂-C₄)-alkenyl or (C₂-C₄) -alkynyl ;
R¹⁷ is halogen, nitro, (C₁-C₄) -alkyl, (C₁-C₄) - haloalkyl, (C₁-C₄) -haloalkoxy, (C₃-C₆) -cycloalkyl, phenyl, (C₁-C₄) -alkoxy, cyano, (C₁-C₄) -alkylthio, (C₁-C₄) -alkylsulfinyl, (C₁-C₄) -alkylsulfonyl, (C₁-C₄) -alkoxycarbonyl or (C₁-C₄) -alkylcarbonyl ;
R¹⁸ is hydrogen, (C₁-C₆) -alkyl, (C₃-C₆) -cycloalkyl, (C₂-C₆) -alkenyl, (C₂-C₆) -alkynyl, (C₅-C₆) - cycloalkenyl, phenyl or 3- to 6-membered heterocyclyl comprising v heteroatoms from the group consisting of nitrogen, oxygen and sulfur, where the seven last-mentioned radicals are substituted by v substituents from the group consisting of halogen, (C₁-C₆) -alkoxy, (C₁-C₆) - haloalkoxy, (C₁-C₂) -alkylsulfinyl, (C₁-C₂) - alkylsulfonyl, (C₃-C₆) -cycloalkyl, (C₁-C₄) - alkoxycarbonyl, (C₁-C₄)-alkylcarbonyl and phenyl and in the case of cyclic radicals also (C₁-C₄) - alkyl and (C₁-C₄)-haloalkyl ;
R¹⁹ is hydrogen, (C₁-C₆) -alkyl, (C₂-C₆) -alkenyl or (C₂-C₆) -alkynyl, where the three last-mentioned radicals are substituted by v radicals from the group consisting of halogen, hydroxyl, (C₁-C₄)-alkyl, (C₁-C₄) -alkoxy and (C₁-C₄) -alkylthio, or
R¹⁸ and R¹⁹ together with the nitrogen atom that carries them form a pyrrolidinyl or piperidinyl radical;
R²⁰ is hydrogen, (C₂-C₄) -alkylamino, di- (C₁-C₄) - alkylamino, (C₁-C₆) -alkyl, (C₃-C₆) -cycloalkyl, where the 2 last-mentioned radicals are substituted by v substituents from the group consisting of halogen, (C₁-C₄)-alkoxy, halo-(C₁-C₆)-alkoxy and (C₁-C₄)-alkylthio and in the case of cyclic radicals also (C₁-C₄)-alkyl and (C₁-C₄)-haloalkyl;
c is 0, 1 or 2;
d is 1 or 2;
v is 0, 1, 2 or 3.

2. A herbicidal composition as claimed in claim 1,
where
R³ is hydrogen, halogen, (C₁-C₆) -alkyl, (C₁-C₆) - haloalkyl;
R⁶ is hydrogen or S(O)_{b}R¹³ ;
R¹³ is (C₁-C₆) -alkyl.

3. A herbicidal composition as claimed in claim 1 or 2, where
R¹⁵ is halogen or (C₁-C₄) -alkyl,
R¹⁶ is hydrogen;
R¹⁷ is halogen, nitro, (C₁-C₄) -alkyl, (C₁-C₄) - haloalkyl, (C₁-C₄)-haloalkoxy, (C₃-C₆) -cycloalkyl, (C₁-C₄) -alkoxy, cyano, (C₁-C₄) -alkylthio, (C₁-C₄) - alkylsulfinyl, (C₁-C₄) -alkylsulfonyl, (C₁-C₄) - alkoxycarbonyl or (C₁-C₄) -alkylcarbonyl;
R¹⁸ is hydrogen, (C₁-C₆) -alkyl, (C₃-C₆) -cycloalkyl, (C₂-C₆) -alkenyl, (C₅-C₆) -cycloalkenyl or phenyl,
X is CH,
c is 0.

4. A herbicidal composition as claimed in any of claims 1 to 3, where
R¹⁷ is halogen, (C₁-C₄) -alkyl, (C₁-C₄) -haloalkyl, (C₁-C₄)-haloalkoxy, (C₃-C₆) -cycloalkyl or (C₁-C₄) - alkoxy;
R¹⁸ is hydrogen, (C₁-C₆) -alkyl or (C₃-C₆) - cycloalkyl.

5. A herbicidal composition as claimed in any of claims 1 to 4, where
R³ is chlorine or methyl;
a is 2.

6. A herbicidal composition as claimed in any of claims 1 to 5, where the radical R¹⁴ is located in the 4-position to the sulfonyl group on the phenyl ring and R¹⁴ is CONR¹⁸R¹⁹.

7. A herbicidal composition as claimed in any of claims 1 to 6, where
R¹² is hydrogen;
R¹⁰, R¹¹ are methyl;
R¹³ is (C₁-C₄) -alkyl;
b is 2.

8. A herbicidal composition as claimed in one or more of claims 1 to 7, wherein the weight ratio herbicide:safener is 1:100 to 100:1.

9. A method for controlling harmful plants in crops, which comprises applying a herbicidally effective amount of a herbicide/safener combination as claimed in one or more of claims 1 to 7 to the harmful plants, plants, plant seeds or the area on which the plants grow.

10. A method as claimed in claim 9, wherein the plants originate from the group consisting of corn, wheat, rye, barley, oats, rice, sorghum, cotton, sugar cane and soybean.

11. A method as claimed in claims 9 or 10, wherein the plants are genetically modified.

## Revendications

1. Produit herbicide renfermant :
A) une quantité herbicide active de un ou plusieurs composés de formule (I), éventuellement sous forme de sel, 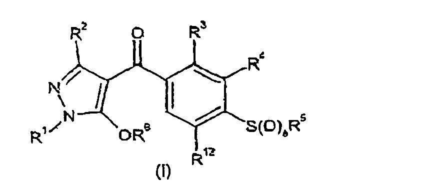 dans laquelle les symboles et indices ont la signification suivante : R⁴ représente 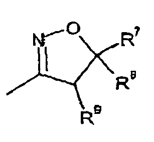 ou R⁴ forme avec R⁵ le groupe CR¹⁰R¹¹CH₂ ;
R², R⁶, R⁷, R⁸, R⁹, R¹⁰, R¹¹ représentent, indépendamment les uns des autres, un atome d'hydrogène ou un groupe alkyle en C₁-C₆;
R¹, R⁵ représentent un groupe alkyle en C₁-C₆;
R³ représente un atome d'hydrogène, d'halogène, un groupe alkyle en C₁-C₆, halogène alkyle en C₁-C₆, alcoxy en C₁-C₆, halogène alcoxy en C₁-C₆, alkylthio en C₁-C₆, alkylsulfinyle en C₁-C₆ ou alkylsulfonyle en C₁-C₆;
R⁶ représente un atome d'hydrogène, le groupe SO_{b}R¹³, COR¹³ ou CH₂COR¹³;
R¹² représente un atome d'hydrogène, d'halogène, un groupe alkyle en C₁-C₆ ou halogène alkyle en C₁-C₆ ;
R¹³ représente un groupe phényle, alkyle en C₁-C₈ ou cycloalkyle en C₃-C₈ ;
a, b représentent, indépendamment l'un de l'autre, 0, 1 ou 2 ;
et
B) une quantité à efficacité antidotique d'un ou plusieurs safeners du groupe N-acylsulfonamide de formule (II), éventuellement aussi sous forme de sel, 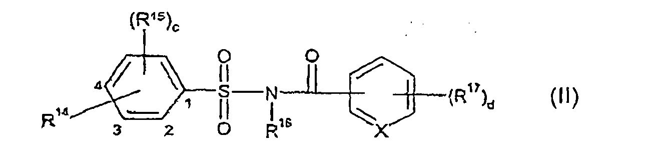
dans laquelle
X représente CH ou N;
R¹⁴ représente CO-NR¹⁸R¹⁹ ou NHCO-R²⁰ ;
R¹⁵ représente un atome d'halogène, un groupe haloalkyle en C₁-C₄, haloalcoxy en C₁-C₄, un groupe nitro, alkyle en C₁-C₄, alcoxy en C₁-C₄, alkylsulfonyle en C₁-C₄, alcoxycarbonyle en C₁-C₄ ou alkylcarbonyle en C₁-C₄ ;
R¹⁵ représente un atome d'hydrogène, un groupe alkyle en C₁-C₄, alcényle en C₂-C₄ ou alcynyle en C₂-C₄ ;
R¹⁷ représente un atome d'halogène, un groupe nitro, alkyle en C₁-C₄, haloalkyle en C₁-C₄ ou haloalcoxy en C₁-C₄, cycloakyle en C₃-C₆, phényle, alcoxy en C₁-C₄, cyano, alkylthio en C₁-C₄, alkylsulfinyle en C₁-C₄, alkylsulfonyle en C₁-C₄, alcoxycarbonyle en C₁-C₄ ou alkylcarbonyle en C₁-C₄ ;
R¹⁸ représente un atome d'hydrogène, un groupe alkyle en C₁-C₆, cycloalkyle en C₃-C₆, alcényle en C₂-C₆, alcynyle en C₂-C₆, cycloalcényle en C₅-C₆, phényle ou hétérocyclyle de 3 à 6 éléments contenant divers hétéroatomes du groupe azote, oxygène et soufre, ces sept derniers résidus étant substitués par divers substituants du groupe halogène, alcoxy en C₁-C₆, haloalcoxy en C₁-C₆, alkylsulfinyle en C₁-C₂, alkylsulfonyle en C₁-C₂, cycloaklyle en C₃-C₆, alcoxycarbonyle en C₁-C₄, alkylcarbonyle en C₁-C₄ et phényle et, dans le cas de résidus cycliques, également alkyle en C₁-C₄ et haloalkyle en C₁-C₄.
R¹⁹ représente un atome d'hydrogène, un groupe alkyle en C₁-C₆, alcényle en C₂-C₆ ou alcynyle en C₂-C₆, ces trois derniers résidus étant substitués par divers résidus du groupe halogène, hydroxy, alkyle en C₁-C₄, alcoxy en C₁-C₄ et alkylthio en C₁-C₄, ou
R¹⁸ et R¹⁹ forment avec l'atome d'azote les portant un résidu pyrrolidinyle ou pipéridinyle ;
R²⁰ représente un atome d'hydrogène, un alkylamino en C₂-C₄, un di-alkylamino en C₁-C₄, un alkyle en C₁-C₆, un cycloaklyle en C₃-C₆, les 2 derniers résidus étant substitués par des substituants du groupe halogène, alcoxy en C₁-C₄, halogène alcoxy en C₁-C₆ et alkylthio en C₁-C₄ et, dans le cas de résidus cycliques, également alkyle en C₁-C₄ et haloalkyle en C₁-C₄.
c représente 0, 1 ou 2 ;
d représente 1 ou 2 ;
v représente 0, 1, 2 ou 3 ;

2. Produit herbicide selon la revendication 1, dans lequel
R³ représente un atome d'hydrogène, un halogène, un groupe alkyle en C₁-C₆, halogène alkyle en C₁-C₆ ;
R⁶ représente un atome d'hydrogène ou un groupe S(O)_{b}R¹³ ;
R¹³ représente un groupe alkyle en C₁-C₆.

3. Produit herbicide selon la revendication 1 ou 2, dans lequel
R¹⁵ représente un groupe alkyle en C₁-C₄ ;
R¹⁶ représente un atome d'hydrogène ;
R¹⁷ représente un atome d'halogène, un groupe nitro, un groupe alkyle en C₁-C₄, haloalkyle en C₁-C₄, haloalcoxy en C₁-C₄, cycloalkyle en C₃-C₆, alcoxy en C₁-C₄, cyano, alkylthio en C₁-C₄, alkylsulfinyle en C₁-C₄, alkylsulfonyle en C₁-C₄, alcoxycarbonyle en C₁-C₄ ou alkylcarbonyle en C₁-C₄ ;
R¹⁸ représente un atome d'hydrogène, un groupe alkyle en C₁-C₆, cycloalkyle en C₃-C₆, alcényle en C₂-C₆, cycloalcényle en C₅-C₆ ou phényle,
X représente CH,
c représente 0.

4. Produit herbicide selon les revendications 1 à 3, dans lequel
R¹⁷ représente un halogène, un groupe alkyle en C₁-C₄, haloalkyle en C₁-C₄, haloalcoxy en C₁-C₄, cycloalkyle en C₃-C₆ ou alcoxy en C₁-C₄;
R¹⁸ représente un atome d'hydrogène, un groupe alkyle en C₁-C₆ ou cycloalkyle en C₃-C₆.

5. Produit herbicide selon les revendications 1 à 4, dans lequel
R³ représente un atome de chlore ou de méthyle ;
a représente 2.

6. Produit herbicide selon l'une des revendications 1 à 5, dans lequel le résidu R¹⁴ se trouve en position 4 par rapport au groupe sulfonyle sur l'anneau phényle et dans lequel R¹⁴ représente le groupe CONR¹⁸R¹⁹.

7. Produit herbicide selon l'une des revendications 1 à 6, dans lequel :
R¹² représente un atome d'hydrogène ;
R¹⁰, R¹¹ représentent un groupe méthyle ;
R¹³ représente un groupe alkyle en C₁-C₄ ;
b représente 2.

8. Produit herbicide selon l'une ou plusieurs des revendications 1 à 7, **caractérisé en ce que** le rapport pondéral herbicide:safener est de 1:100 à 100:1.

9. Procédé de lutte contre les plantes nuisibles pour les cultures, **caractérisé en ce que** l'on applique sur les plantes nuisibles, les plantes, les graines ou les surfaces sur lesquelles croissent les plantes, des quantités herbicides efficaces d'une combinaison herbicide-safener selon l'une ou plusieurs des revendications 1 à 7.

10. Procédé selon la revendication 9, **caractérisé en ce que** les plantes appartiennent au groupe maïs, blé, seigle, orge, avoine, riz, sorgho, coton, canne à sucre et graines de soja.

11. Procédé selon la revendication 9 ou 10, **caractérisé en ce que** les plantes sont génétiquement modifiées.
